# FASCICULE DE BREVET EUROPEEN

(11) **EP 3 536 860 B1**
(45) Date de publication et mention de la délivrance du brevet: **01.06.2022**
(21) Numéro de dépôt: 19160603.7
(22) Date de dépôt: 04.03.2019
(51) Int. Cl.: E02D 29/14, H02G 9/10

(54) **CHAMBRE DE RACCORDEMENT AVEC CADRE MÉTALLIQUE INTÉGRÉ**
ANSCHLUSSRAUM MIT INTEGRIERTEM METALLRAHMEN
CONNECTION CHAMBER WITH INTEGRATED METAL FRAME

(30) Priorité: 07.03.2018 FR 1851945
(43) Date de publication de la demande: 11.09.2019
(73) Titulaire: Semap Composite, 08120 Bogny Sur Meuse (FR)
(72) Inventeur: KRATTLI, Christian, 08120 BOGNY-SUR-MEUSE (FR)
(74) Mandataire: Cabinet Bleger-Rhein-Poupon

(56) Documents cités:
- EP-A1- 2 878 734
- FR-A- 1 262 314
- GB-A- 2 483 863

## Description

La présente invention a trait, dans le domaine des ouvrages civils souterrains, à une chambre de raccordement consistant, plus spécifiquement, en une pièce utilisée enterrée dans le sol, de forme parallélépipédique rectangle et fermée supérieurement par au moins un tampon.

Une telle chambre de raccordement, au sens de la présente invention, est destinée à loger des moyens de raccordement de fils ou câbles faisant partie d'un réseau de distribution. A cet effet, elle est destinée à être disposée à la jonction des réseaux d'électricité et/ou de télécommunication, pour y réaliser des raccordements.

De manière connue, une chambre de raccordement est constituée de la superposition, au travers de moyens d'emboîtement, d'éléments en forme de cadre, sous la forme d'un élément de base et d'un élément supérieur pour la réception du tampon.

On connait déjà, par conséquent, dans l'état de la technique, des dispositifs de chambre de raccordement de conception simple et de mise en œuvre aisée, permettant de remplacer les dispositifs utilisés auparavant et réalisés en béton.

Un tel dispositif est par exemple décrit dans le document FR 2 941 716.

Le dispositif de chambre de raccordement décrit dans ce document FR 2 941 716 consiste en une pièce utilisée enterrée dans le sol, de forme parallélépipédique rectangle, fermée supérieurement par un ou plusieurs tampons, et logeant des moyens de raccordement de fils ou câbles faisant partie d'un réseau de distribution, et qui est constituée de la superposition, au travers de moyens d'emboîtement, d'au moins deux éléments, chacun venant du moulage d'un matériau composite, et chacun comprenant une paroi périphérique constituée de deux peaux délimitant un espace destiné à être rempli de béton.

Un tel dispositif présente de nombreux avantages par rapport à ce qui existait auparavant, notamment en ce qui concerne la facilité de mise en œuvre, en raison de son faible poids et de l'encombrement réduit des pièces qui le composent, et également en matière de facilité de stockage.

Ce dispositif présente toutefois encore certains inconvénients, notamment en ce qu'il implique de couler du béton, lequel est cependant nécessaire pour assurer la cohésion des différents éléments qui constituent un coffrage perdu. D'autre part, la partie supérieure du dispositif ne permet pas d'accueillir de manière optimisée un ou plusieurs tampons.

Par ailleurs, les dispositifs de chambre de raccordement de ce type permettent difficilement de gérer le problème de l'eau de ruissellement, que ce soit à l'extérieur comme à l'intérieur du dispositif de chambre de raccordement.

Pour pallier une partie de ces inconvénients, le document de brevet EP 2 878 734 décrit un dispositif de chambre de raccordement, qui consiste en une pièce enterrée dans le sol, de forme parallélépipédique rectangle, fermée supérieurement au moyen d'au moins un tampon, et destinée à loger des moyens de raccordement de fils ou câbles.

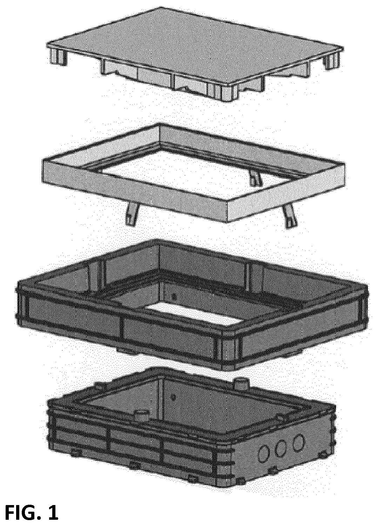

Un exemple de réalisation de la partie supérieure d'un tel dispositif de l'état de la technique est représenté sur la figure 1 des dessins ci-joint, pour une compréhension plus aisée.

Le dispositif est ici constitué de la superposition, au travers de moyens d'emboîtement de type plots, d'éléments de base et d'un élément supérieur recevant le tampon, tous ces éléments étant fabriqués à partir du moulage d'un matériau composite.

Les éléments de base et l'élément supérieur comportent, outre les moyens d'emboîtement, des moyens de réception de moyens de liaison conçus aptes à la solidarisation entre eux d'éléments superposés.

Il est également prévu, dans ce dispositif, que chacun des éléments de base présente, extérieurement et périphériquement, des moyens de collecte d'eau de ruissellement, par exemple sous forme de gorges périphériques interne et externe, ainsi que des moyens d'évacuation de cette eau, ces derniers pouvant se présenter sous la forme d'ouvertures.

Ainsi, le dispositif selon cet état de la technique permet notamment de remédier de manière efficace au problème de gestion et d'évacuation de l'eau de ruissellement.

Toutefois, certains inconvénients persistent.

En particulier, dans cet état de la technique, l'élément supérieur du dispositif de chambre de raccordement comporte une feuillure interne, qui reçoit un cadre métallique, lui-même destiné à supporter un tampon. Au niveau de la surface du fond de la feuillure sont disposées des nervures périmétriques et concentriques, constituant des moyens de retenue du béton pour sceller le cadre métallique, tout en évitant que le béton ne tombe dans la chambre de raccordement.

Il est également prévu que la surface du fond de la feuillure interne comporte des petits plots, régulièrement répartis, pour constituer des moyens d'écartement aptes à permettre au béton de s'épandre.

A noter encore que la solidarisation du cadre métallique est renforcée par la prise des pattes de fixation, que comporte ce cadre, dans du béton remplissant des logements ménagés intérieurement à l'élément supérieur, dans la joue de la feuillure.

Ainsi, il est clair que l'opération de coulage du béton reste nécessaire pour assurer la cohésion et la solidarisation du cadre métallique sur l'élément supérieur de la chambre de raccordement.

Or, une telle opération est fastidieuse et présente de nombreux inconvénients, en particulier le fait que le séchage du béton pour assurer la prise des différents éléments entre eux représente un temps certain et non négligeable.

En outre, la présence d'un engin dédié au coulage du béton est requise, ce qui peut gêner, voire empêcher les déplacements sur la voirie au niveau de laquelle la chambre de raccordement doit être mise en place, pendant le temps des opérations.

A noter encore que, préalablement au scellement, il peut s'avérer nécessaire d'ajuster le cadre métallique non seulement en hauteur, mais également en inclinaison, par exemple par rapport au dévers du trottoir, de manière à ce que le tampon logé dans ledit cadre métallique affleure parfaitement au niveau de la surface dudit trottoir, que ce dernier soit droit ou qu'il présente une pente plus ou moins importante.

En particulier, en ce qui concerne le dévers du trottoir, celui-ci devrait être normalement inférieur ou égal à 2%, pour respecter la norme P98/350 sur l'accessibilité des voiries aux personnes handicapées. Toutefois, le dévers peut souvent aller jusqu'à une pente de 6%.

Dans tous les cas, l'adaptation du cadre métallique dans la feuillure à l'aide de béton, pour que le tampon affleure à la surface, est relativement coûteuse pour l'installateur de tels dispositifs de chambre de raccordement, tout en étant, en plus, fastidieuse et aléatoire.

La présente invention a pour but de proposer, notamment, une chambre de raccordement permettant de remédier, de manière particulièrement ingénieuse, à une partie au moins des inconvénients précités.

A cet effet, la présente invention est relative à une chambre de raccordement, qui consiste en une pièce utilisée enterrée dans le sol, de forme parallélépipédique rectangle, fermée supérieurement par au moins un tampon, ladite chambre logeant des moyens de raccordement de fils ou câbles faisant partie d'un réseau de distribution, et constituée de la superposition, au travers de moyens d'emboîtement, d'éléments en forme de cadre, et comprenant au moins un élément de base et un élément supérieur destiné à recevoir ledit tampon au travers d'un cadre métallique, où chacun desdits éléments en forme de cadre vient du moulage d'un matériau composite, chacun desdits éléments comportant, outre lesdits moyens d'emboîtement, des moyens de réception complémentaires auxdits moyens d'emboîtement, conçus aptes à la solidarisation entre eux de deux éléments superposés, ladite chambre de raccordement étant caractérisée en ce que le cadre métallique fait partie intégrante de l'élément supérieur sans que le cadre métallique ne soit scellé à l'élément supérieur par du béton.

Tout préférentiellement, l'élément supérieur comporte un couronnement qui forme une feuillure interne sur laquelle ledit cadre métallique est surmoulé.

Dans un exemple de réalisation avantageux de l'invention, qui ne doit toutefois pas être considéré comme étant limitatif, ledit cadre métallique, avantageusement surmoulé sur l'élément supérieur, est en aluminium.

De manière particulièrement intéressante, la chambre de raccordement selon l'invention comporte, en outre, au moins un dispositif correcteur d'inclinaison disposé entre l'élément supérieur et un élément de base et/ou au moins un dispositif correcteur d'inclinaison disposé entre deux éléments de base successifs, ledit dispositif correcteur étant de forme parallélépipédique rectangle et de dimensions identiques en longueur et en largeur aux dimensions des éléments en forme de cadre, et en ce que deux des côtés parallèles sont de hauteurs différentes et les côtés qui les relient sont de hauteur variable, allant en rétrécissant depuis ledit côté le plus haut vers ledit côté le moins haut, ledit dispositif correcteur comprenant, en outre, des moyens d'emboîtement complémentaires aux moyens d'emboîtement des éléments en forme de cadre de la chambre de raccordement.

Ainsi, par exemple, ledit dispositif correcteur d'inclinaison comprend deux grands côtés et deux petits côtés, lesdits deux grands côtés pouvant présenter une hauteur différente tandis que lesdits deux petits côtés qui les relient sont de hauteur variable, allant en rétrécissant depuis ledit grand côté le plus haut vers ledit grand côté le moins haut du dispositif correcteur d'inclinaison.

Dans un autre exemple, ledit dispositif correcteur d'inclinaison comprend toujours deux grands côtés et deux petits côtés, et ce sont lesdits deux petits côtés qui présentent des hauteurs différentes, tandis que lesdits deux grands côtés qui les relient sont de hauteur variable, allant en rétrécissant depuis ledit petit côté le plus haut vers ledit petit côté le moins haut du dispositif correcteur d'inclinaison.

Quelle que soit la configuration retenue pour le dispositif correcteur d'inclinaison susmentionné, la pente, entre le côté le plus haut et le côté le moins haut dudit dispositif, est préférentiellement comprise entre 0,5 et 3%.

A noter encore que, de manière avantageuse, chacun desdits éléments de base de la chambre de raccordement selon l'invention présente, extérieurement et périphériquement, des moyens de collecte d'eau de ruissellement, ainsi que des moyens d'évacuation de cette eau de ruissellement.

La présente invention présente notamment l'avantage de permettre un gain de temps substantiel lors de la pose de la chambre de raccordement, les étapes de coulage et de séchage du béton n'étant plus nécessaires pour assurer une cohésion de certains éléments de ladite chambre.

Un autre avantage de la présente invention réside dans la facilité de pose de la chambre de raccordement pour les opérateurs, qui n'ont plus besoin de couler de béton, au moyen d'engins dédiés, opération pouvant s'avérer délicate car minutieuse, notamment lorsque le béton doit être coulé au niveau d'éléments de petite taille.

En outre, la présente invention peut permettre, de manière particulièrement aisée, d'adapter l'inclinaison d'un ou plusieurs tampon(s) refermant, en partie supérieure, une chambre de raccordement, par exemple pour loger des moyens de raccordement de fils ou câbles d'un réseau de distribution, afin que ledit ou lesdits tampon(s) affleure(nt) à la surface du sol, sans la nécessité d'ajustement toujours au moyen de béton.

Les avantages et les caractéristiques de la chambre de raccordement selon l'invention et celles du dispositif correcteur d'inclinaison d'au moins un tampon pouvant équiper cette chambre, ressortiront plus clairement de la description qui suit et qui se rapporte aux figures annexées, lesquelles en représentent plusieurs modes de réalisation non limitatifs.

Plus particulièrement, dans les figures annexées :
- la figure 1 illustre schématiquement une vue en perspective et en éclaté, des éléments constitutifs de la partie supérieure d'une chambre de raccordement selon l'état de la technique, notamment un élément de base en partie inférieure de la chambre, surmonté d'un élément supérieur auquel il est solidarisé par des moyens adaptés, ledit élément supérieur étant destiné à coopérer avec un cadre métallique venant en prise, au travers de pattes d'accrochage, dans une couche de béton coulée au niveau de la feuillure interne du cadre de l'élément supérieur ;

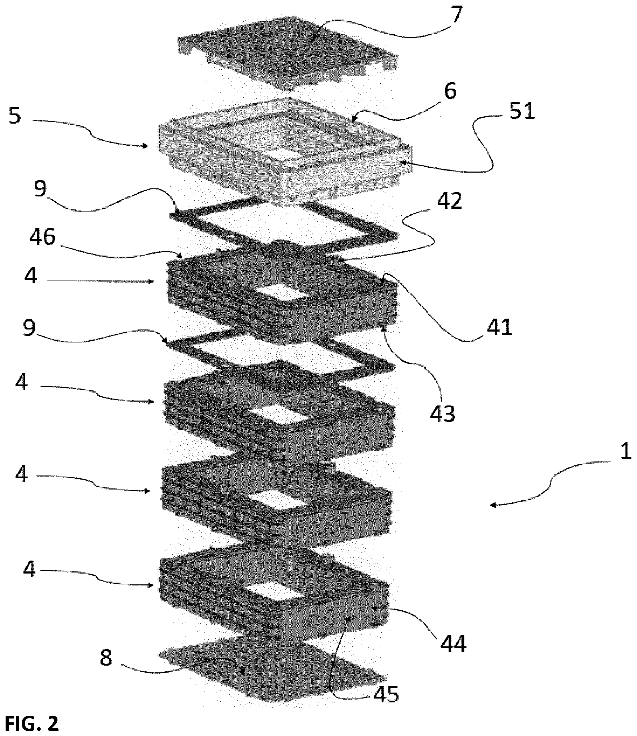

- la figure 2 illustre schématiquement une vue en perspective et en éclaté, d'un mode de réalisation particulier et non limitatif d'une chambre de raccordement selon l'invention, dans laquelle un cadre métallique, destiné à recevoir un tampon, est surmoulé sur la feuillure interne de l'élément supérieur, tandis qu'un premier dispositif correcteur d'inclinaison est ménagé entre cet élément supérieur et l'élément de base disposé immédiatement en dessous, et qu'un second dispositif correcteur d'inclinaison est ménagé entre deux éléments de base successifs ;

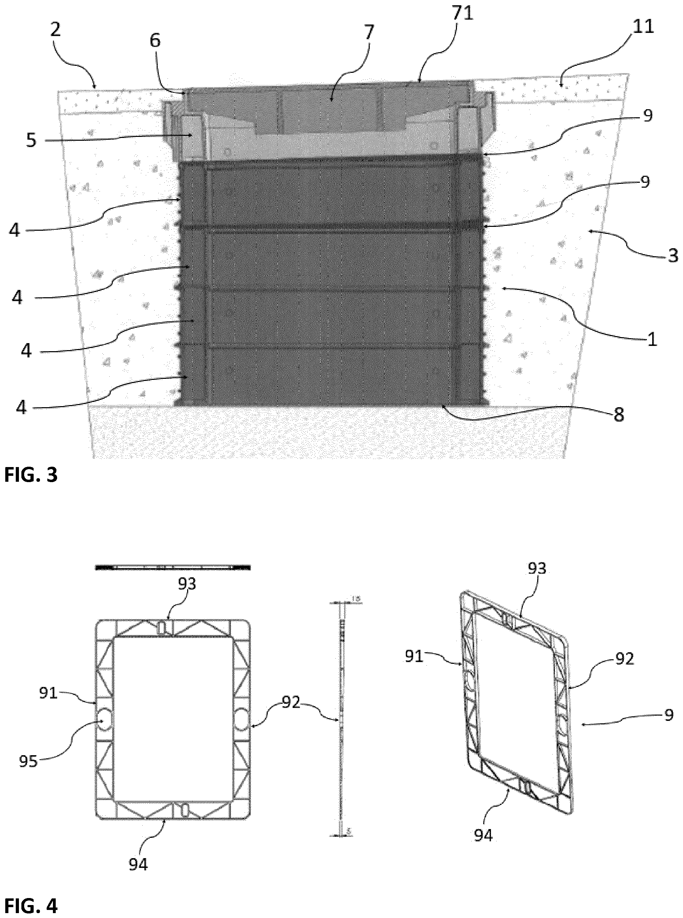

- la figure 3 représente, de manière schématique, une vue en coupe longitudinale d'une chambre de raccordement selon la figure 2, mise en place sous la surface du sol, ladite chambre de raccordement étant notamment équipée de deux correcteurs d'inclinaison ;
- la figure 4 représente, de manière schématique et selon plusieurs vues (une vue de face, deux vues de côté et une vue en perspective), un premier mode de réalisation d'un dispositif correcteur d'inclinaison destiné à équiper la chambre de raccordement selon l'invention, lequel dispositif présente deux grands côtés et deux petits côtés, ces derniers ayant des hauteurs différentes et les deux grands côtés les reliant étant de hauteur variable ;

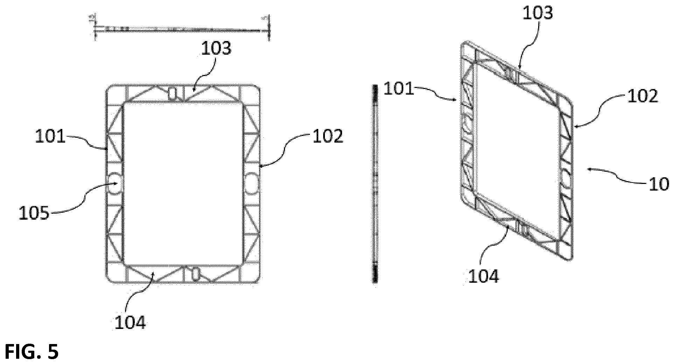

- la figure 5 représente, de manière schématique et selon plusieurs vues (une vue de face, deux vues de côté et une vue en en perspective), un second mode de réalisation d'un dispositif correcteur d'inclinaison destiné à équiper la chambre de raccordement selon l'invention, lequel dispositif présente deux grands côtés et deux petits côtés, lesdits deux grands côtés ayant des hauteurs différentes et les deux petits côtés les reliant étant de hauteur variable.

En référence aux figures 2 et 3 des dessins ci-joints, la présente invention est relative à une chambre de raccordement 1 pour une utilisation où elle est destinée à être enterrée sous la surface 2 du sol 3, afin d'y loger des moyens de raccordement de fils ou câbles faisant partie d'un réseau de distribution, essentiellement un réseau de télécommunication, de tels moyens n'étant pas représentés sur les figures annexées.

Une telle chambre de raccordement 1 conforme à l'invention présente, avantageusement, et tel que représenté sur les figures, une forme parallélépipédique rectangle, bien que toute autre forme soit envisageable.

La présente chambre de raccordement 1 est, de manière essentielle, constituée de la superposition d'une pluralité d'éléments, présentant la forme générale d'un cadre, en l'occurrence au moins un élément de base 4 et un élément supérieur 5.

Ainsi, dans l'exemple de réalisation de la chambre de raccordement 1 représenté sur les figures 2 et 3, ladite chambre 1 comporte superposés deux à deux, quatre éléments de base 4, de préférence identiques, et un élément supérieur 5.

Toutefois, un tel mode de réalisation ne doit pas être considéré comme étant limitatif de l'invention, et il se peut très bien que la chambre de raccordement 1 selon l'invention comporte un seul élément de base 4, ou bien un nombre différent d'éléments de bases 4, par exemple deux, trois ou plus de quatre éléments de base 4.

Sur les figures 2 et 3, on peut ainsi voir quatre éléments de base 4, lesquels sont de forme rectangulaire, comprenant ainsi deux grands côtés (longueur) et deux petits côtés (largeur), chacun présentant une hauteur constante, ainsi qu'une épaisseur relativement importante.

On remarquera que chaque élément de base 4 comporte, faisant saillie de sa face supérieure 41, une pluralité de plots d'emboîtement 42, destinés à coopérer avec des cavités d'emboîtement correspondantes, non visibles sur les figures jointes, et pratiquées dans la face inférieure soit d'un autre élément de base 4, soit de l'élément supérieur 5, et permettant d'assembler, respectivement, deux éléments de base 4 successifs entre eux, ou bien encore un élément supérieur 5 sur l'élément de base 4 qui est destiné à être positionné directement en dessous de lui.

On notera encore que, de manière avantageuse, les plots d'emboîtement 42 peuvent être garnis extérieurement d'au moins une nervure longitudinale, de préférence écrasable, permettant un ajustage des emboîtements.

Dans la chambre de raccordement 1 selon l'invention, l'emboîtement d'éléments successifs deux à deux peut également être complété d'une solidarisation par vissage, par exemple au moyen d'une pluralité de pattes 43 garnissant chacune des parois extérieures des côtés des éléments de base 4, lesdites pattes 43 étant par ailleurs munies chacune d'un trou pour le passage d'une vis, non représentée, et destinée à être vissée dans l'élément de base 4 placé directement en dessous.

Par ailleurs, on peut noter également que les éléments de base 4 comportent, en l'occurrence sur les petits côtés 44 de ces éléments 4, des prédécoupes 45, préférentiellement rondes, destinées chacune, après découpe, notamment au moyen d'une scie à cloche, au passage éventuel d'une gaine pour le passage de câbles ou de fils.

A noter encore que, dans un exemple préférentiel de la chambre de raccordement de l'invention 1, celle-ci présente, en outre, extérieurement et périphériquement des moyens de collecte d'eau de ruissellement par exemple sous la forme de gorges périphériques interne et externe au niveau de la face supérieure 41 d'un élément de base 4, ainsi que des moyens d'évacuation de cette eau de ruissellement, préférentiellement sous la forme d'ouvertures 46 ménagées dans la gorge périphérique externe et débouchant sur l'extérieur de ladite chambre de raccordement 1.

On notera également que ces ouvertures 46 sont créées, de manière avantageuse, en regard des pattes 43, ce qui permet à celles-ci d'y prendre place lors de l'emboîtement.

De manière avantageuse, les pattes 43 de l'élément de base 4 le plus bas permettent de fixer une plaque 8 qui constitue le fond de la chambre de raccordement 2.

En outre, la face inférieure d'un élément de base 4 comporte avantageusement deux nervures périphériques externe et interne, non visibles sur les figures, destinées à coopérer en emboîtement lors de la superposition desdits éléments 4.

On notera également que, de manière toute préférentielle, l'élément supérieur 5 peut comporter, faisant saillie inférieurement, deux nervures périphériques externe et interne, destinées à coopérer en emboîtement avec, respectivement, les gorges périphériques externe et interne de l'élément de base 4 placé immédiatement en dessous de cet élément supérieur 5.

En ce qui concerne à présent, plus particulièrement, les caractéristiques dudit élément supérieur 5 de la chambre de raccordement 1, outre un cadre conformé pour s'adapter, notamment par emboîtement, à un élément de base 4 qui est positionné directement en dessous, ledit élément supérieur 5 loge un cadre métallique 6, lui-même étant adapté à recevoir un ou plusieurs tampon(s) 7 pour refermer ladite chambre 1.

Selon une caractéristique particulière et essentielle à la chambre de raccordement 1 de l'invention, ledit cadre métallique 6 fait partie intégrante de l'élément supérieur 5.

A cet effet, dans un exemple de réalisation non limitatif, le cadre métallique 6 fait partie intégrante de l'élément supérieur 5 par une opération réalisée préalablement en usine d'insertion et de fixation dudit cadre 6 sur l'élément supérieur 5 au travers de moyens appropriés.

Toutefois, de manière encore plus avantageuse, ledit élément supérieur 5 de la chambre de raccordement 1 selon l'invention comporte un couronnement 51 qui forme une feuillure interne sur laquelle ledit cadre métallique 6 est surmoulé.

Dans un exemple de réalisation tout préférentiel, le cadre métallique, intégré à l'élément supérieur 5, est préférentiellement réalisé en aluminium.

Grâce à cette caractéristique particulière de la chambre de raccordement 1 de l'invention, les opérateurs en charge de la mise en place d'une telle chambre, à l'endroit approprié du réseau de distribution, bénéficient d'une réduction du temps qui leur est nécessaire à la pose de ladite chambre. Une telle pose est par ailleurs facilitée du fait que l'on s'affranchit complètement du coulage et du séchage de béton, opérations encore nécessaires dans la mise en place des chambres de l'état de l'art, pour la solidarisation d'éléments entre eux.

En particulier, la mise en œuvre de la chambre de raccordement 1 de l'invention permet la pose de la couche d'enrobé 11 immédiatement, sans attendre la solidification du béton, celle-ci impliquant nécessairement le report de la pose de l'enrobé, généralement au lendemain de l'installation de la chambre de raccordement.

Dès lors, on comprend que la chambre de raccordement 1 de l'invention représente un gain économique considérable.

Précédemment dans la description, l'un des éléments constitutifs de la chambre de raccordement 1 a d'ores et déjà été évoqué, il s'agit du tampon 7.

De manière générale, le tampon 7 est l'élément permettant de fermer l'ouverture d'une chambre de raccordement 1. A cet effet, il doit affleurer la surface 2 du sol 3, de manière à ce que ladite surface 2 et le tampon 7 présente une certaine continuité, sans aucune ou quasiment aucune différence de niveau entre ledit sol 3 et la chambre de raccordement 1.

Lorsque la surface 2 du sol 3 est horizontale, ou quasiment horizontale, la mise en place d'une chambre de raccordement 1 selon l'invention et telle que décrite jusqu'à présent permet de garantir cette continuité de niveau qui est recherchée, entre ladite surface 2 du sol 3 et la face supérieure 71 du tampon 7 qui referme l'ouverture de la chambre 1.

Cependant, dans le cas où la surface 2 du sol 3, à l'endroit où la chambre de raccordement 1 doit être mise en place, présente une certaine pente, comme illustré sur la figure 3 des dessins ci-joints, cette pente pouvant aller dans certaines configurations jusqu'à 6%, il est également nécessaire de garantir la continuité de niveau entre ladite surface 2 et la face supérieure 71 du tampon 7.

A cet effet, ladite chambre de raccordement 1 selon l'invention peut incorporer, lorsque cela s'avère nécessaire, au moins un dispositif correcteur d'inclinaison 9, 10 tel que décrit plus en détails ci-après.

Ainsi, par exemple, dans la présente chambre de raccordement 1, au moins un dispositif correcteur d'inclinaison 9, 10 peut être intégré entre l'élément supérieur 5 et un élément de base 4 positionné directement en dessous et/ou entre deux éléments de base 4 successifs.

Ces deux possibilités de positionnement d'un dispositif correcteur d'inclinaison 9 entre deux éléments 4, 5 de ladite chambre 1 selon l'invention sont illustrées sur les figures 2 et 3.

En effet, sur ces figures, est représentée une chambre de raccordement 1 au niveau de laquelle un premier dispositif correcteur d'inclinaison 9 est logé entre l'élément supérieur 5 et l'élément de base 4 qui lui est inférieur, tandis qu'un second dispositif correcteur d'inclinaison 9 identique prend position entre deux éléments de base 4, en l'occurrence entre l'élément de base 4 positionné directement sous l'élément supérieur 5 et l'élément de base 4 de rang inférieur.

Ainsi, on comprend qu'il est envisageable qu'une pluralité de dispositifs correcteurs d'inclinaison 9, 10 équipent une chambre de raccordement 1 d'un réseau de distribution conforme à l'invention.

Toutefois, dans une telle configuration avec plusieurs dispositifs correcteurs d'inclinaison 9, 10, il est préférable qu'un premier dispositif 9, 10 soit positionné entre l'élément supérieur 5 et l'élément de base 4 positionné directement sous celui-ci, et qu'un second dispositif 9, 10 soit positionné à un rang inférieur, entre deux éléments de base 4.

En d'autres termes, il est avantageux que deux dispositifs correcteurs d'inclinaison 9, 10 ne soient pas superposés, et ce afin de faciliter la solidarisation de ces dispositifs 9, 10 avec les éléments 4, 5 de la chambre de raccordement 1 au travers de moyens d'emboîtement qui seront décrits plus en détail ci-après.

Quoiqu'il en soit, dans une configuration où la chambre 1 est équipée d'au moins un dispositif correcteur d'inclinaison 9, 10 positionné entre l'élément supérieur 5 et un élément de base 4 et/ou entre deux éléments de base 4, l'opération fastidieuse d'ajustement de l'inclinaison, effectuée jusqu'à lors au moyen de béton pour incliner le cadre métallique avant réception du tampon, afin que celui-ci affleure parfaitement la surface 2 du sol 3, même si ce sol est en pente, est supprimée.

Par conséquent, il devient envisageable, même dans une chambre de raccordement 1 destinée à être positionnée sous la surface 2 d'un sol 3 présentant une inclinaison, et grâce au dispositif correcteur d'inclinaison 9, 10, que le cadre métallique 6 puisse être directement encastré dans l'élément supérieur 5, pour en faire partie intégrante, de fabrication, par une opération de surmoulage, par exemple.

En référence, à présent, aux figures 4 et 5, on peut voir deux exemples de réalisation différents d'un dispositif correcteur d'inclinaison 9, 10 destiné à venir équiper la chambre de raccordement 1 selon l'invention.

De manière générale, un dispositif correcteur d'inclinaison 9, 10 destiné à équiper ladite chambre 1, présente nécessairement une forme parallélépipédique rectangle, en forme générale de cadre, identique à la forme des éléments de base 4 et supérieur 5 de ladite chambre 1.

En outre, les dimensions du dispositif correcteur d'inclinaison 9, 10 sont également identiques, en longueur et en largeur, aux dimensions en longueur et en largeur des éléments 4, 5 de la chambre de raccordement 1, en sorte que ledit dispositif 9, 10 puisse être intercalé aisément, par exemple entre deux desdits éléments 4, 5.

A noter également que ledit dispositif correcteur d'inclinaison 9, 10 présente quatre côtés parallèles deux à deux, deux des côtés parallèles étant de hauteurs différentes, un premier côté étant considéré comme le côté le plus haut et un second côté étant considéré comme le côté le moins haut, et les côtés les reliant étant de hauteur variable, allant en rétrécissant depuis ledit côté le plus haut vers ledit côté le moins haut.

Dans un premier exemple de réalisation, qui est celui illustré sur la figure 4 des dessins ci-joints, ledit dispositif correcteur d'inclinaison 9 se présente sous la forme d'un cadre rectangulaire, comprenant deux grands côtés 91, 92 et deux petits côtés 93, 94.

Ici, lesdits deux petits côtés 93, 94 présentent des hauteurs différentes entre eux, la hauteur de chaque côté 93, 94 étant par ailleurs continue sur l'ensemble de sa longueur.

Par exemple, l'un des petits côtés 93 présente une hauteur constante de 15 mm sur l'ensemble de sa longueur tandis que le second petit côté 94 du dispositif 9 présente une hauteur constante de 5 mm sur toute sa longueur.

Les deux grands côtés 91, 92, qui relient les petits côtés 93, 94 entre eux, présentent, au contraire, une hauteur variable sur l'ensemble de leur longueur, cette hauteur allant en rétrécissant régulièrement depuis ledit petit côté 93 le plus haut vers ledit petit côté 94 le moins haut, comme illustré sur la vue de côté dispositif correcteur d'inclinaison 9.

Sur les figures 2 et 3, la chambre de raccordement 1 selon l'invention est équipé de deux dispositifs correcteur d'inclinaison 9 tels que décrits en référence à la figure 4.

Dans un second exemple de réalisation, décrit en référence à la figure 5 représentant un dispositif correcteur d'inclinaison numéroté 10, ce sont les deux grands côtés 101 et 102 qui ont chacun une hauteur différente.

Tout comme pour l'exemple de la figure 4, l'un des grands côtés 101 présente une hauteur constante de 15 mm, et constitue le grand côté le plus haut, tandis que le second grand côté 102 a une hauteur constante de 5 mm et constitue le grand côté le moins haut.

A ce moment-là, les deux petits côtés 103 et 104, qui relient les deux grands côtés 101, 102 entre eux, ont une hauteur variable allant en rétrécissant régulièrement depuis ledit grand côté le plus haut 101 vers ledit grand côté 102 le moins haut.

Quel que soit le mode de réalisation qui est retenu, la pente entre le côté le plus haut 93, 101 et le côté le moins haut, respectivement 94, 102, du dispositif correcteur d'inclinaison 9, 10, est, de manière avantageuse, comprise entre 0,5 et 3%.

Ainsi, si la chambre de raccordement 1 selon l'invention doit être installée sous une surface 2 présentant une pente finale de 6%, par exemple, il est envisageable que deux dispositifs correcteurs d'inclinaison 9, 10 identiques, présentant chacun des côtés de hauteur variable avec une pente de 3%, viennent équiper ladite chambre 1.

A noter également qu'il est tout à fait envisageable qu'une telle chambre de raccordement 1 selon l'invention soit équipée, à la fois, au moins :
- d'un premier dispositif correcteur d'inclinaison 9 dont les grands côtés 91, 92 présentent une hauteur variable et dont la pente est comprise entre 0,5 et 3% ;
- d'un second dispositif correcteur d'inclinaison 10 dont ce sont les petits côtés 103, 104, cette fois, qui présentent une hauteur variable et dont la pente est comprise entre 0,5 et 3%.

Une telle utilisation, dans une chambre de raccordement 1 selon l'invention, de différents dispositifs correcteurs d'inclinaison 9, 10 permet, de manière particulièrement avantageuse, de corriger un dévers de la surface 2 du sol 3 allant dans deux directions, en sorte que le(s) tampon(s) 7 refermant ladite chambre de raccordement 1 affleure(nt) parfaitement la surface 2 du sol 3, et ce quelles que soient les circonstances et la configuration du sol 3.

Une autre caractéristique avantageuse du dispositif correcteur d'inclinaison 9, 10 pouvant équiper la chambre de raccordement 1 de l'invention est qu'il comprend des moyens d'emboîtement complémentaires aux moyens d'emboîtement des différents éléments 4, 5 de la chambre de raccordement 1 entre lesquels ledit dispositif 9, 10 est destiné à être positionné.

Il a déjà été évoqué le fait que, préférentiellement, les moyens d'emboîtement des éléments 4, 5 de la chambre de raccordement 1 peuvent consister en des plots d'emboitement 42 faisant saillie de la face supérieure 41 et coopérant avec des cavités d'emboîtement correspondantes.

En ce qui concerne le dispositif correcteur d'inclinaison 9, 10, celui-ci comporte, avantageusement, des trous 95, 105, respectivement, autorisant le passage desdits plots d'emboîtement 42 tout en permettant encore la coopération de ces plots 42 avec les cavités d'emboîtement correspondantes.

Pour ce qui est de la fabrication des éléments de base 4 ou de l'élément supérieur 5 de la chambre de raccordement 1 selon l'invention, ainsi que de l'éventuel dispositif correcteur d'inclinaison 9, 10 destiné à équiper préférentiellement la présente chambre 1, celle-ci se fait avantageusement à partir du moulage d'un matériau composite.

## Revendications

1. Chambre de raccordement (1), qui consiste en une pièce utilisée enterrée dans le sol (3), de forme parallélépipédique rectangle, fermée supérieurement par au moins un tampon (7), ladite chambre (1) logeant des moyens de raccordement de fils ou câbles faisant partie d'un réseau de distribution, et constituée de la superposition, au travers de moyens d'emboîtement (42), d'éléments en forme de cadre, et comprenant au moins un élément de base (4) et un élément supérieur (5) destiné à recevoir ledit tampon (7) au travers d'un cadre métallique (6), où chacun desdits éléments (4, 5) en forme de cadre vient du moulage d'un matériau composite, chacun desdits éléments (4, 5) comportant, outre lesdits moyens d'emboîtement (42), des moyens de réception complémentaires auxdits moyens d'emboîtement, conçus aptes à la solidarisation entre eux de deux éléments (4, 5) superposés, ladite chambre de raccordement (1) étant **caractérisée en ce que** le cadre métallique (6) fait partie intégrante de l'élément supérieur (5), sans que le cadre métallique ne soit scellé à l'élément supérieur par du béton.

2. Chambre de raccordement (1) selon la revendication 1, **caractérisée en ce que** l'élément supérieur (5) comporte un couronnement (51) qui forme une feuillure interne sur laquelle ledit cadre métallique (6) est surmoulé.

3. Chambre de raccordement (1) selon l'une quelconque des revendications précédentes, **caractérisée en ce que** ledit cadre métallique (6) est en aluminium.

4. Chambre de raccordement (1) selon l'une quelconque des revendications précédentes, **caractérisée en ce qu'**elle comporte en outre au moins un dispositif correcteur d'inclinaison (9, 10) disposé entre l'élément supérieur (5) et un élément de base (4) et/ou au moins un dispositif correcteur d'inclinaison (9, 10) disposé entre deux éléments de base (4) successifs, ledit dispositif correcteur (9, 10) étant de forme parallélépipédique rectangle et de dimensions identiques en longueur et en largeur aux dimensions des éléments (4, 5) en forme de cadre, et **en ce que** deux des côtés parallèles (93, 94; 101, 102) sont de hauteurs différentes et les côtés (91, 92; 103, 104) qui les relient sont de hauteur variable, allant en rétrécissant depuis ledit côté le plus haut (93; 101) vers ledit côté le moins haut (94 ; 102), ledit dispositif correcteur (9, 10) comprenant en outre des moyens d'emboîtement complémentaires (95 ; 105) aux moyens d'emboîtement (42) des éléments en forme de cadre (4, 5) de la chambre de raccordement (1).

5. Chambre de raccordement (1) selon la revendication précédente, **caractérisée en ce que** ledit dispositif correcteur d'inclinaison (10) comprend deux grands côtés (101, 102) et deux petits côtés (103, 104), lesdits deux grands côtés (101, 102) présentant une hauteur différente et lesdits deux petits côtés (103, 104) qui les relient étant de hauteur variable, allant en rétrécissant depuis ledit grand côté le plus haut (101) vers ledit grand côté le moins haut (102).

6. Chambre de raccordement (1) selon la revendication 4 **caractérisée en ce que** ledit dispositif correcteur d'inclinaison (9) comprend deux grands côtés (91, 92) et deux petits côtés (93,94), lesdits deux petits côtés (93, 94) présentant des hauteurs différentes et lesdits deux grands côtés (91, 92) qui les relient sont de hauteur variable, allant en rétrécissant depuis ledit petit côté le plus haut (93) vers ledit petit côté le moins haut (94).

7. Chambre de raccordement (1) selon l'une quelconque des revendications 4 à 6 **caractérisée en ce que** la pente entre le côté le plus haut (93 ; 101) et le côté le moins haut (94 ;102) dudit dispositif correcteur d'inclinaison (9,10) est comprise entre 0,5 et 3%.

8. Chambre de raccordement (1) selon l'une quelconque des revendications précédentes, **caractérisée en ce que** chacun desdits éléments de base (4) présente extérieurement et périphériquement des moyens de collecte d'eau de ruissellement, ainsi que des moyens d'évacuation de cette eau de ruissellement.

## Patentansprüche

1. Anschlusskammer (1), die aus einem in den Boden eingegrabenen, verwendeten Teil (3) in rechteckiger Parallelepipedform besteht, das oben durch wenigstens einen Puffer (7) verschlossen ist, wobei die Kammer (1) Mittel zum Anschließen von Drähten oder Kabeln, die Teil eines Verteilungsnetzes sind, unterbringt, und aus der Überlagerung von rahmenförmigen Elementen durch Einsteckmittel (42) besteht und wenigstens ein Basiselement (4) und ein oberes Element (5) umfasst, das dazu bestimmt ist, den Puffer (7) durch einen Metallrahmen (6) aufzunehmen, wobei jedes der rahmenförmigen Elemente (4, 5) aus einem Verbundwerkstoff geformt wird, wobei jedes der Elemente (4, 5) neben den Einsteckmitteln (42) Aufnahmemittel aufweist, die zu den Einsteckmitteln komplementär sind und dazu ausgelegt sind, zwei übereinander gelagerte Elemente (4, 5) aneinander zu befestigen, wobei die Anschlusskammer (1) **dadurch gekennzeichnet ist, dass** der Metallrahmen (6) ein integraler Teil des oberen Elements (5) ist, ohne dass der Metallrahmen durch Beton mit dem oberen Element versiegelt wird.

2. Anschlusskammer (1) nach Anspruch 1, **dadurch gekennzeichnet, dass** das obere Element (5) eine Krone (51) aufweist, die einen inneren Falz ausbildet, an dem der Metallrahmen (6) angeformt ist.

3. Anschlusskammer (1) nach einem der vorhergehenden Ansprüche, **dadurch gekennzeichnet, dass** der Metallrahmen (6) aus Aluminium besteht.

4. Anschlusskammer (1) nach einem der vorhergehenden Ansprüche, **dadurch gekennzeichnet, dass** sie ferner wenigstens eine Neigungskorrekturvorrichtung (9, 10), die zwischen dem oberen Element (5) und einem Basiselement (4) angeordnet ist, und/oder wenigstens eine Neigungskorrekturvorrichtung (9, 10) aufweist, die zwischen zwei aufeinanderfolgenden Basiselementen (4) angeordnet ist, wobei die Korrekturvorrichtung (9, 10) eine rechteckige Parallelepipedform und identische Abmessungen in Länge und Breite wie die Abmessungen der rahmenförmigen Elemente (4, 5) aufweist, und dass zwei der parallelen Seiten (93, 94; 101, 102) unterschiedliche Höhen aufweisen und die Seiten (91, 92; 103, 104), die sie verbinden, eine variable Höhe aufweisen, die sich von der höchsten Seite (93; 101) zu der niedrigeren Seite (94; 102) verjüngt, wobei die Korrekturvorrichtung (9, 10) ferner Einsteckmittel (95; 105) umfasst, die komplementär zu den Einsteckmitteln (42) der rahmenförmigen Elemente (4, 5) der Anschlusskammer (1) sind.

5. Anschlusskammer (1) nach dem vorhergehenden Anspruch, **dadurch gekennzeichnet, dass** die Neigungskorrekturvorrichtung (10) zwei lange Seiten (101, 102) und zwei kurze Seiten (103, 104) umfasst, wobei die zwei langen Seiten (101, 102) eine unterschiedliche Höhe vorweisen und die zwei kurzen Seiten (103, 104), die sie verbinden, eine variable Höhe aufweisen, die sich von der höchsten langen Seite (101) zu der niedrigsten langen Seite (102) hin verjüngt.

6. Anschlusskammer (1) nach Anspruch 4, **dadurch gekennzeichnet, dass** die Neigungskorrekturvorrichtung (9) zwei lange Seiten (91, 92) und zwei kurze Seiten (93, 94) umfasst, wobei die zwei kurzen Seiten (93, 94) unterschiedliche Höhen vorweisen und die zwei langen Seiten (91, 92), die sie verbinden, eine variable Höhe aufweisen, die sich von der höchsten kurzen Seite (93) zu der niedrigsten kurzen Seite (94) hin verjüngt.

7. Anschlusskammer (1) nach einem der Ansprüche 4 bis 6, **dadurch gekennzeichnet, dass** die Steigung zwischen der höchsten Seite (93; 101) und der niedrigsten Seite (94; 102) der Neigungskorrekturvorrichtung (9, 10) zwischen 0,5 und 3 % liegt.

8. Anschlusskammer (1) nach einem der vorhergehenden Ansprüche, **dadurch gekennzeichnet, dass** jedes der Basiselemente (4) außen und am Umfang Mittel zum Sammeln von Ablaufwasser sowie Mittel zum Abführen dieses Ablaufwassers vorweist.

## Claims

1. Connection chamber (1), which consists of a part which is used by being buried in the ground (3), which is in the shape of a parallelepiped rectangle and is closed at the top by at least one pad (7), said chamber (1) accommodating means for connecting wires or cables which form part of a distribution network, and consisting of stacking, via fitting means (42), frame-shaped elements, and comprising at least one base element (4) and an upper element (5) which is intended to receive said pad (7) via a metal frame (6), where each of said frame-shaped elements (4, 5) is molded from a composite material, each of said elements (4, 5) comprising, in addition to said fitting means (42), receiving means which are complementary to said fitting means and are designed to be suitable for securing two stacked elements (4, 5) together, said connection chamber (1) being **characterized in that** the metal frame (6) forms an integral part of the upper element (5) without the metal frame being sealed to the upper element by concrete.

2. Connection chamber (1) according to claim 1, **characterized in that** the upper element (5) comprises a crowning (51) which forms an internal rabbet on which said metal frame (6) is overmolded.

3. Connection chamber (1) according to either of the preceding claims, **characterized in that** said metal frame (6) is made of aluminum.

4. Connection chamber (1) according to any of the preceding claims, **characterized in that** it further comprises at least one inclination controller device (9, 10) which is arranged between the upper element (5) and a base element (4) and/or at least one inclination controller device (9, 10) which is arranged between two successive base elements (4), said controller device (9, 10) being in the shape of a parallelepiped rectangle and having length and width dimensions which are identical to the dimensions of the frame-shaped elements (4, 5), and **in that** two of the parallel sides (93, 94; 101, 102) are of different heights and the sides (91, 92; 103, 104) which connect them are of variable height, tapering from said highest side (93; 101) to said least high side (94; 102), said controller device (9, 10) further comprising fitting means which are complementary (95; 105) to the fitting means (42) of the frame-shaped elements (4, 5) of the connection chamber (1).

5. Connection chamber (1) according to the preceding claim, **characterized in that** said inclination controller device (10) comprises two long sides (101, 102) and two short sides (103, 104), said two long sides (101, 102) having a different height and said two short sides (103, 104) which connect them being of variable height, tapering from said highest long side (101) to said least high long side (102).

6. Connection chamber (1) according to claim 4, **characterized in that** said inclination controller device (9) comprises two long sides (91, 92) and two short sides (93, 94), said two short sides (93, 94) having different heights and said two long sides (91, 92) which connect them are of variable height, tapering from said highest short side (93) to said least high short side (94).

7. Connection chamber (1) according to any of claims 4 to 6, **characterized in that** the slope between the highest side (93; 101) and the least high side (94; 102) of said inclination controller device (9, 10) is between 0.5 and 3%.

8. Connection chamber (1) according to any of the preceding claims, **characterized in that** each of said base elements (4) has, externally and peripherally, means for collecting surface runoff, as well as means for draining this surface runoff.
